# EUROPÄISCHE PATENTSCHRIFT

(11) **EP 1 294 457 B1**
(45) Veröffentlichungstag und Bekanntmachung des Hinweises auf die Patenterteilung: **09.02.2005**
(21) Anmeldenummer: 01957893.9
(22) Anmeldetag: 26.06.2001
(51) Int. Cl.: A63F 13/12, G08G 1/127

(54) **VERWENDUNG DER VON EINEM ORTUNGSSYSTEM FÜR RENNFAHRZEUGE GESPEICHERTEN DATEN ZUR UNTERSTÜTZUNG COMPUTERGESTÜTZTER SIMULATIONSSPIELE**
USE OF THE DATA STORED BY A RACING CAR POSITIONING SYSTEM FOR SUPPORTING COMPUTER-BASED SIMULATION GAMES
DONNEES MEMORISEES PAR UN SYSTEME DE LOCALISATION D'AUTOMOBILES DE COURSE ET UTILISEES POUR SUPPORTER DES JEUX DE SIMULATION ASSISTES PAR ORDINATEUR

(30) Priorität: 26.06.2000 DE 10031026
(43) Veröffentlichungstag der Anmeldung: 26.03.2003
(73) Patentinhaber: WNS-Europe.Com AG, 85399 Hallbergmoos (DE)
(72) Erfinder: ASAM, Robert, 85399 Hallbergmoos (DE)
(74) Vertreter: Winter, Brandl, Fürniss, Hübner, Röss, Kaiser, Polte, Partnerschaft
(86) Internationale Anmeldenummer: PCT/EP2001/007284
(87) Internationale Veröffentlichungsnummer: WO 2002/000318

(56) Entgegenhaltungen:
- EP-A- 0 773 514
- WO-A-00/16869
- WO-A-98/46029
- US-A- 5 598 167
- US-A- 6 020 851

## Beschreibung

Die vorliegende Erfindung betrifft ein Ortungssystem für Rennfahrzeuge, insbesondere zur Anwendung bei einem Formel-1 Rennen und insbesondere auf die Verwendung von Daten, die von einem derartigen Ortungssystem während eines Rennens gewonnen werden.

Sportrennen mit verschiedenartigen Rennfahrzeugen sind seit Jahrhunderten bekannt und beliebt. Ihr Popularität hat immer wieder dazu geführt, daß für die jeweilige Rennart spezielle Fahrzeuge, Streckenaufbereitungsmaßnahmen, Fahrtechniken und so weiter entwickelt bzw. angewandt werden. Es gibt stets neue Entwicklungen, die der erhöhten Sicherheit, der Publikumsinformation, einer höheren Renngeschwindigkeit o.ä. dienen.

Die US 5,731,788 offenbart ein System und Verfahren zur Positionierungskontrolle und Verwaltung von Rennsegelschiffspositionen und - geschwindigkeiten, das die strategische Plazierung von GPS-Empfängern und Sendern an einem Boje und einem Komiteeboot, die die Startlinie des Segelrennens kennzeichnen, sowie von Funk- und GPS-Empfängern am Segelschiff umfaßt. GPS- und Funksendereinheiten sind an einem Rennstartboje und einem Komiteeboot befestigt und eine andere GPS- und Funksender-Empfängereinheit empfängt GPS-Signale von Positionierungssatelliten und Radiosignale vom Rennstartboje und dem Komiteeboot. Die vom Rennsegelschiff empfangenen Informationen werden verarbeitet, um die relativen und absoluten Positionen und Geschwindigkeiten, sowie die geschätzte Ankunftszeit beim Schnitt des aktuellen Segelschiffskurses mit der Rennstartlinie zwecks Anzeige in einer benutzerfreundlichen Rennverwaltung zu ermitteln.

Aus der US 3,714,649 ist beispielsweise ein Fahrzeugrennüberwachungssystem bekannt, das ein vollständig automatisches System zur Überwachung von Autorennen oder dergleichen darstellt. Jedes Fahrzeug trägt einen Transponder, der sein eigenes Passieren eines Positionsevents, beispielsweise eine Überquerung der Start-Ziel-Linie, das Befahren bzw. Verlassen des Boxbereichs, etc., feststellt und ein dieses kennzeichnendes Signal an einen Empfänger am Fahrbahnrand neben dem Positionevent im Zeitmultiplexverfahren mit den Transpondern aller anderen Fahrzeuge übermittelt. Ein Hauptsender sendet ein zeitlich teilbares Synchronisationssignal an alle Fahrzeugtransponder, und jeder Transponder ist derart ausgestaltet, daß er ein Positionseventsignal nur während eines vorgegebenen Zeitabschnitts des Synchronisationssignals sendet. Die Empfänger am Fahrbahnrand speisen eine zentrale Kontrolleinheit, die auch mit dem Hauptsender synchronisiert ist und das Erscheinen der Positionsevents jedes Fahrzeugs in Echtzeit bucht. Eine Uhr und ein Computer werden vorgesehen, damit der Rennrang, die Umrundungsgeschwindigkeiten, u.s.w. aus den gebuchten Daten ermittelt werden können. Das System zur Erkennung des Vorkommens eines Positionsevents basiert auf dem Prinzip, daß eine am Fahrzeug getragene Induktivität ein veränderliches Magnetfeld durchquert, dessen Polaritätsorientierung die Position des jeweiligen Events definiert.

Auch ist aus der US 4,949,067 ein Renngefahrenzustandswarnsystem bekannt, das einen Sender, der von einem Streckenposten oder anderem Rennfunktionär betätigt wird, sowie ein ausreichende Anzahl von Empfängereinheiten umfaßt, so daß jedes Rennfahrzeug eine Empfängereinheit aufweist. Der Sender sendet ein kodiertes Signal, das überall entlang der Rennstrecke empfangen werden kann, entsprechend einem Zustand einer roten, gelben oder grünen Fahne. Die Empfängereinheiten, die jeweils in sich abgeschlossen sind und eine eingebaute Stromversorgung umfassen, empfangen und dekodieren das Signal und schalten dann grüne, gelbe oder rote Lampen ein. Das System bietet den Rennteilnehmern eine im wesentlichen sofortige Warnung auf einen Gefahrenzustand auf der Rennstrecke.

In der eigenen älteren Patentanmeldung PCT/EP00/10518, deren Inhalt in die vorliegende Anmeldung einbezogen wird, ist ein Ortungssystem für Rennfahrzeuge vorgeschlagen, das eine erweiterte Funktionalität, vereinfachte Bedienung und erhöhte Sicherheit gegenüber dem bisherigen Stand der Technik anbietet. Weitere Vorteile der Erfindung werden unten näher erläutert.

Wesentliche Merkmale dieses Ortungssystems sind in den Ansprüchen 6 bis 20 angegeben.

Im wesentlichen besteht ein derartiges Ortungssystem gemäß einer ersten Variante aus einer Fahrzeuginformationsvorrichtung, die in einem Rennfahrzeug untergebracht wird und die eine Ortungsvorrichtung zur Gewinnung und Ausgabe von Ortungsdaten, über die die Position des Rennfahrzeugs bestimmt werden kann, und einen Sender umfaßt, der die Ortungsdaten an eine Zentrale übermittelt. Auf diese Art und Weise wird eine kostengünstige und zuverlässige Bestimmung der Fahrzeugposition gewährleistet. Insbesondere wird hierdurch eine eventuelle Verwechslung jeweiliger Rennfahrzeuge ausgeschlossen, da jedes Rennfahrzeug seine eigene Ortungsdaten bestimmt und meldet. Zudem kann der Sender auch dazu verwendet werden, weitere Daten an die Zentrale zu übermitteln.

Zur vorteilhaften Ausführung der Erfindung wird eine Vielzahl solcher Fahrzeuginformationsvorrichtungen in Kombination mit einer Berechnungsvorrichtung betrieben, die aus den übermittelten Ortungsdaten anhand gespeicherter Rennstreckendaten die Position der jeweiligen Rennfahrzeuge auf einer Rennstrecke berechnet. Durch das virtuelle Abbilden des Rennstreckenverlaufs in Form von Rennstreckendaten können die jeweiligen Positionen der Rennfahrzeuge anhand der übermittelten Ortungsdaten bestimmt werden, ohne daß positionsbestimmende Vorrichtungen an allen wesentlichen Punkten der Rennstrecke eingerichtet werden müssen. Auch ein Verlassen der Rennstrecke oder ein Liegenbleiben eines Fahrzeugs läßt sich ohne zusätzlichen Aufwand bestimmen und genau orten.

Die Streckendaten lassen sich bei entsprechender, fachnotorischer Speicherung wiederverwenden; sie können aber auch bei Änderungen der Strecke durch entsprechende Maßnahmen teilweise oder insgesamt aktualisiert werden. Auch eine Übertragung der Streckendaten auf ein anderes Ortungssystem ist möglich.

Es ist dem Fachmann bekannt, daß die Ortungsdaten auf vielfache Art und Weise im Fahrzeug gewonnen werden können. Z.B. kann das Fahrzeug mit einem GPS-Empfänger (GPS = "Global Positioning System", ein globales, satellitengestütztes Navigationssystem) oder einem sonstigen Satellitenempfänger, einem Peilempfänger oder einem Gyrosensor ausgestattet werden. Auch eine redundante Kombination solcher Empfänger bzw. Sensoren kann verwendet werden. Ggf. können die jeweiligen Rennfahrzeuge auch mit unterschiedlichen Ortungsvorrichtungen zur Gewinnung der Ortungsdaten ausgestattet werden. Im Falle einer Verwendung von Peilempfängern ist es notwendig, das Ortungssystem durch mindestens drei Peilsender an der Rennstrecke zu vervollständigen, deren jeweiligen Positionen genau bekannt sind. Durch entsprechende Entfernungsmessungen zwischen den Peilsendern und dem jeweiligen Peilempfänger läßt sich dann die Position letzteres bestimmen.

Wie eingangs erwähnt wurde, kann der in der Fahrzeuginformationsvorrichtung vorgesehene Sender auch dazu verwendet werden, Fahrzeugbetriebskenndaten zu übermitteln, beispielsweise die Fahrzeuggeschwindigkeit, die Motordrehzahl oder ähnliche Daten. Solche Daten werden durch entsprechende Sensoren oder aus der Fahrzeugelektronik gewonnen und lassen zum Beispiel ein Liegenbleiben oder eine sonstige Gefahrenlage des Rennfahrzeugs schnell erkennen. Um einen Mißbrauch der Ortungs- bzw. Betriebsdaten zu vermeiden, können die Daten auf an sich bekannte Weise insgesamt oder teilweise verschlüsselt übermittelt werden. Auch in Bezug auf diese bevorzugten Merkmale der Erfindung ist es nicht notwendig, daß die jeweiligen Fahrzeuginformationsvorrichtungen bzw. Rennfahrzeuge in gleicher Art und Weise ausgestattet werden.

Vorzugsweise umfaßt das Ortungssystem eine Zentrale, die über die obenerwähnten Berechnungsvorrichtung, einen Speicher zum Speichern der Streckendaten der Rennstrecke sowie über einen oder mehreren Empfänger zum Empfangen der von den jeweiligen Fahrzeuginformationsvorrichtungen übermittelten Ortungs- bzw. Betriebskenndaten verfügt. Dabei können diejenigen Systemkomponenten, die nicht gezwungenermaßen räumlich voneinander getrennt sein müssen, jeweils als Einzelkomponenten, teilweise gruppiert oder als integrierte Gesamteinheit ausgeführt werden.

Es ist zudem vorteilhaft, wenn die Zentrale einen Sender umfaßt, der zur Ausstrahlung von Sicherheitsdaten verwendet werden kann, und ein oder mehrere am Ortungssystem beteiligten Rennfahrzeuge über entsprechende Empfänger und Anzeigevorrichtungen verfügen, um die Sicherheitsdaten ggf. zu empfangen und entsprechend anzuzeigen. Somit könnte beispielsweise dann, wenn über das erfindungsgemäße Ortungssystem festgestellt worden ist, daß ein Rennfahrzeug stehengeblieben ist, eine entsprechende Warnung analog der bei der Formel-1 üblichen grünen, gelben und roten Flaggen an die anderen im Ortungssystem beteiligten Rennfahrzeuge ausgestrahlt und dort signalisiert werden.

Insbesondere können die in den Rennfahrzeugen montierten Empfänger auch mit einer Kennung versehen werden, die der Zentrale ein selektives Ansprechen der jeweiligen Empfänger erlaubt. Auf diese Art und Weise ist es möglich, entsprechend der Gefahrenlage zwischen den verschiedenen am Ortungssystem beteiligten Rennfahrzeugen zu differenzieren. Zum Beispiel könnte bei denjenigen Fahrzeugen, die erst nach langer Zeit die Gefahrenstelle erreichen werden, "grünes Licht" signalisiert werden, während bei Rennfahrzeugen, die in Kürze an der Gefahrenstelle vorbeifahren werden, "rotes Licht" signalisiert wird. Bei den restlichen Rennfahrzeugen wird "gelbes Licht" signalisiert. Andere fachnotorische Unterscheidungsverfahren, beispielsweise Zeit- oder Frequenzmultiplexbetrieb, sind hier ebenso anwendbar, um ein selektives Ansprechen der verschiedenen Rennfahrzeuge zu erlauben.

Um die Notwendigkeit einer Beteiligung aller Rennfahrzeuge am Ortungssystem zu umgehen bzw. um weitere Streckensicherheit zu gewährleisten, können die bei Rennveranstaltungen üblicherweise vorkommenden Streckenüberwachungsposten ebenfalls am Ortungssystem beteiligt werden, indem eines oder mehrere davon auch mit Empfängern und Anzeigevorrichtungen ausgestattet werden, die die ausgestrahlten Sicherheitsdaten empfangen und entsprechend anzeigen. Auch hier kann über den Einsatz einer Kennung o.ä. ein selektives Ansprechen der jeweiligen Streckenüberwachungsposten ermöglicht werden. Aus Sicherheitsgründen können die Sicherheitsdaten auf fachnotorische Weise insgesamt oder teilweise verschlüsselt übermittelt werden.

Vorzugsweise umfaßt das erfindungsgemäße Ortungssystem eine Darstellungsvorrichtung, die über die Streckendaten und die berechneten Fahrzeugpositionen eine visuelle Anzeige der aktuellen Positionen ausgewählter Rennfahrzeuge auf der Rennstrecke ermöglicht. Diese Aufgabe kann ggf. von der Berechnungsvorrichtung übernommen werden, so daß keine zusätzliche Hardware für die Darstellungsvorrichtung notwendig ist. Beispielsweise könnte die Berechnungsvorrichtung die gewonnenen Positionsinformation zusammen mit den Streckendaten zu einem Videosignal aufbereiten, das an die das Rennen übertragenden Fernsehsender übermittelt wird. Die Darstellungsvorrichtung kann aber auch eine oder mehreren Großleinwände bzw. Videoschirme umfassen, die eine solche visuelle Anzeige ausgewählter Fahrzeugpositionen dem vor Ort anwesenden Publikum präsentiert. Damit entsteht ein System, das neben den sicherheitrelevanten Vorteile den besonderen Vorzug hat, daß die Zuschauer eines Rennens - unabhängig von ihren jeweiligen Standplätzen - über die Rennsituationen auf dem gesamten Kurs in Echtzeit informiert werden können, wodurch die Attraktivität eines Rennstreckenbesuchs erheblich gesteigert wird.

Gleichfalls kann die Darstellungsvorrichtung eine datenverarbeitende Vorrichtung umfassen, die unter anderem eine visuelle Anzeige der aktuellen Positionen ausgewählter Rennfahrzeuge auf der Rennstrecke auf darstellende Datenverarbeitungsvorrichtungen ermöglicht, die beispielsweise über ein Festnetz- oder eine Funkverbindung mit der datenverarbeitenden Vorrichtung zur Datenübertragung vernetzt sind. Somit könnte z.B. eine virtuelle Übertragung des Renngeschehens im Internet verwirklicht werden. Auch andere vom erfindungsgemäßen Ortungssystem erfaßten Renndaten, beispielsweise der jeweilige Rang oder die aktuelle Geschwindigkeit ausgewählter Rennfahrzeuge, ließen sich über eine solche im Ortungssystem integrierte datenverarbeitende Vorrichtung und entsprechende Vernetzung auf den darstellenden Datenverarbeitungsvorrichtungen aufrufen bzw. darstellen. Die datenverarbeitende Vorrichtung wird derart im Ortungssystem integriert, daß die im Ortungssystem enthaltenen, relevanten Renndaten von der datenverarbeitenden Vorrichtung zur fachnotorischen Einspeisung in ein Datennetz derart aufbereitet bzw. verarbeitet werden können, daß eine angestrebte Audiound/oder visuelle Darstellung des Renngeschehens bzw. der erwünschten Renndaten auf der jeweiligen darstellenden Datenverarbeitungsvorrichtung möglich ist. Dabei können die jeweiligen Darstellungen einer Vielzahl von darstellenden Datenverarbeitungsvorrichtungen unterschiedlich sein. Beispielsweise könnte ein als darstellende Datenverarbeitungsvorrichtung fungierendes Mobiltelefon nur den jeweiligen Rang und Vorsprung ausgewählter Rennfahrzeuge darstellen, während ein über das Internet mit der datenverarbeitende Vorrichtung vernetzter Computer eine virtuelle Darstellung des Renngeschehens, z.B. die aktuellen Positionen beliebig ausgewählter Rennfahrzeuge auf der Rennstrecke, am Bildschirm präsentiert. Vorzugsweise wird die gewünschte Darstellungsart bzw. die darzustellende Information durch interaktive Eingabe zwischen dem Benutzer der darstellenden Datenverarbeitungsvorrichtung und der datenverarbeitenden Vorrichtung ausgewählt.

Alle oder ausgewählte Komponenten des Ortungssystems werden erfindungsgemäß vorzugsweise redundant ausgeführt, um die Funktionalität des Ortungssystem auch im Falle eines Ausfalls eines oder mehrerer Komponenten zu gewährleisten. Insbesondere trifft dies auf die sicherheitsrelevanten Komponenten, beispielsweise die Berechnungsvorrichtung, des Ortungssystems zu.

Alternativ läßt sich das Ortungssystem im Sinne einer zweiten Auführungsform dadurch realisieren, daß die jeweiligen Fahrzeuginformationsvorrichtungen anstelle der Ortungsvorrichtung und des Senders lediglich über einen Sender zum Ausstrahlen von Peilsignale verfügen. Durch mindestens drei vom System umfaßte, räumlich getrennte Peilempfänger können somit Ortungsdaten außerhalb des Fahrzeugs gewonnen und an die Zentrale übermittelt werden, wo sie von der Berechnungsvorrichtung wie oben beschrieben verarbeitet werden. Da die Peilempfänger beispielsweise über Kabel mit der Zentrale verbunden sein können, entfällt ggf. die Notwendigkeit eines Empfängers bei der Zentrale. Alle anderen Merkmale der Erfindung sind wie bei der ersten Ausführungsform.

Es ist auch möglich, daß diese zweite Ausführungsform nur bei ausgewählten Rennfahrzeugen angewandt wird, bzw. daß die beiden Ausführungsformen der Erfindung unter den Rennteilnehmern koexistieren.

Die vorliegenden Erfindung will das vorstehend anhand seiner besonderen Vorzüge charakterisierte Ortungssystem in vorteilhafter Weise für weitere Anwendungen nutzbar machen, insbesondere für Computer-Simulationsspiele, bei denen die Spieler in real ausgetragenen Rennen virtuell mitfahren können.

Derartige Computersimulationsspiele mit bezug zur Realität sind bekannt, beispielsweise aus der WO 98/46029. Dort wird ein graphisches Bildbearbeitungssystem offenbart, bei dem die beweglichen Objekte eines Sportereignisses mittels Bildbearbeitung aus den Videodaten einer Videoquelle extrahiert werden und dazu benutzt werden, den Verlauf des Sportereignisses in 3-D darzustellen und virtuellen Mitspielern das (virtuelle) Mitwirken in dem Sportereignis unter Einbeziehung der echten Spieler zu erlauben. Bei Fahrzeugrennen, bei dem die einzelnen Objekte, d.h die Rennfahrzeuge über einen großen Raum verteilt sein können, können die Rennfahrzeuge von einer einzelnen Videoquelle jedoch oft nicht aufgenommen werden.

Das in EP 773 514 A1 gezeigte Virtual-Reality-System weist um ein Spielfeld herum positionierte Positionsaufnehmer auf, die die von den Spielern und den anderen Objekten, wie beispielsweise Bällen, mitgeführten Sendern ausgestrahlten Signale empfangen und an einen Prozessor weiterleiten, der die Daten beispielsweise mittels Interferometrie-Verfahren in Positionsdaten umrechnet und via Datenfernübertragung an verschiedene Empfänger weiterleitet, u.a. an interaktive Spielkonsolen, zwecks Datenübernahme in ein Videospiel.

Schließlich kann der Schrift WO/16869 ein Autorennsimulations-Computerspiel entnommen werden, das es einem Benutzer unter Verwendung von Renndaten der tatsächlich vorhandenen Fahrzeuge als Referenzdaten ermöglicht, virtuell an einem echten Rennen teilzunehmen, d.h. in Konkurrenz zu echten Rennfahrzeugen zu treten. Das Dokument lehrt außerdem, dass die Positionsdaten der Rennfahrzeuge von an den Rennfahrzeugen installierten Vorrichtungen gewonnen werden, beispielweise mittels GPS-Ortung. Diese Daten werden an eine Zentrale gesendet, welche wiederum die Daten an die Spieleapplikation weiterleitet. Zusätzlich ist dort auch schon eine Aufbereitung der Renndaten vorgesehen.

Demgegenüber ist es Aufgabe der vorliegenden Erfindung, die Realitätsnähe und damit den Attraktivitätsgrad und Nervenkitzel für die virtuell mitfahrenden Spieler des Computer-Simulationsspiels zu steigern.

Diese Aufgabe wird durch die Merkmale des Anspruchs 1 gelöst. Vorteilhafte Varianten sind Gegenstand der Unteransprüche.

Erfindungsgemäß werden die vom Ortungssystem gemäß der älteren eigenen Anmeldung PCT/EP00/10518 gewonnenen und vorzugsweise gespeicherten oder zwischengespeicherten Daten dazu herangezogen, computergestützte Simulationsspiele zu unterstützen. Die Referenzdaten bilden somit die Randbedingungen für das Computer-Simulationsspiel. Diese erfindungsgemäße Verwendung des Ortungssystems bzw. dessen gewonnener Daten, eröffnet die Möglichkeit, derartigen Simulationsspielen einen bislang nicht erreichten Bezug zur Realität zu geben, indem beispielsweise die Echt-Zeitachse des reellen Rennverlaufs oder die reellen Fahrzustands- und Betriebsdaten der Rennfahrzeuge während des reell abgelaufenen oder ablaufenden Rennens als Randbedingung für das Simulationsspiel eingespeist werden. Über eine geeignete Schnittstellen-Software können diese Daten ohne weiteres mit der Simulation kompatibel gemacht werden.

Die Daten können als Referenzdaten unbearbeitet oder aber auch in bearbeiteter, d.h. in aufbearbeiteter Form dem Simulationsspiel eingespeist werden, wobei wiederum eine geeignete Schnittstelle bzw. Schnittstellen-Software für die Kompatibilität des Datensatzes mit dem Simulationsspiel sorgt. Im Rahmen dieser Datenbearbeitung kann beispielsweise die Zeitachse der Daten gestreckt werden, so dass sich die Daten auch für ungeübte Spieler gut nutzen lassen.

Schon allein dadurch dass die vom Ortungssystem übernommenen Positionsdaten in der Regel auch die Höhendaten des Kurses beinhalten, kann die Wirklichkeitsnähe des Simulationsspiels erheblich gesteigert werden. Eine weitere Verbesserung gelingt dadurch, dass auch die Betriebsdaten der Fahrzeuge in die Simulation einfließen können, so dass es erstmalig gelingt, in einem Simulationsspiel einen Kurs gegen Vergleichsfahrzeuge in Echtzeit derart zu fahren, dass auch das Verhalten des Fahrzeugs Berücktigung finden kann.

Ausführungsbeispiele eines Ortungssystems, dessen Daten als Referenzdaten für ein Computer-Simulationsspiel herangezogen werden, werden unter Bezugnahme auf die Zeichnungen näher beschrieben. Es zeigen:
Fig. 1 die Abbildung einer Rennstrecke durch Streckendaten gemäß einem bevorzugten Ausführungsbeispiel der Erfindung;
Fig. 2A eine Rennstrecke mit einem Ortungssystem gemäß einem bevorzugten Ausführungsbeispiel der Erfindung nach der ersten Ausführungsform;
Fig. 2B eine Rennstrecke mit einem Ortungssystem gemäß einem bevorzugten Ausführungsbeispiel der Erfindung nach der zweiten Ausführungsform;
Fig. 3A ein Rennfahrzeug mit einer Fahrzeuginformationsvorrichtung gemäß einem ersten Ausführungsbeispiel nach der ersten Ausführungsform;
Fig. 3B ein Rennfahrzeug mit einer Fahrzeuginformationsvorrichtung gemäß einem ersten Ausführungsbeispiel nach der zweiten Ausführungsform;
Fig. 3C ein Rennfahrzeug mit einer Fahrzeuginformationsvorrichtung gemäß einem zweiten Ausführungsbeispiel;

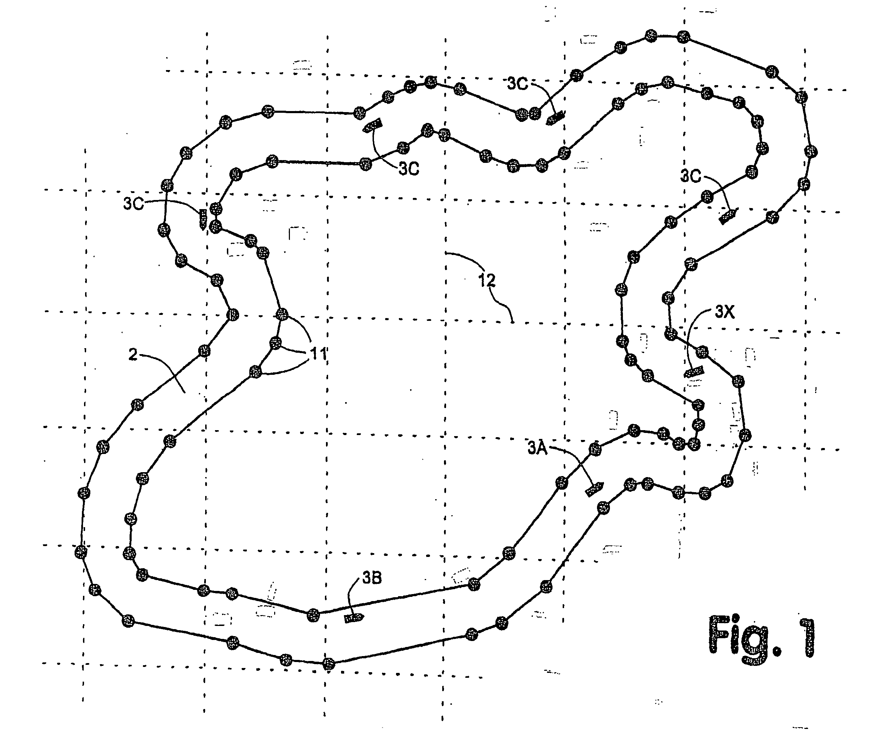

Die Figur 1 stellt das Abbilden einer Rennstrecke 2 durch Streckendaten gemäß einem vorteilhaften Ausführungsbeispiel eines erfindungsgemäßen Ortungssystems 1 dar. Sie zeigt eine Mehrzahl von am Ortungssystem beteiligten Rennfahrzeugen 3A, 3B, 3C und 3X, die sich auf einer Rennstrecke 2 befinden.

Um die Position eines oder mehrerer der Rennfahrzeuge 3 auf der Rennstrecke 2 berechnen zu können, wird die Rennstrecke 2 im Ortungssystem 1 in Form von Streckendaten derart abgebildet gespeichert, daß ein Vergleich der Streckendaten mit von den jeweiligen Rennfahrzeugen 3 erhaltenen Ortungsdaten möglich ist. Dieser Vergleich findet in einer Berechnungsvorrichtung 9, beispielsweise einer digitalen EDV-Anlage, des Ortungssystems 1 statt. Dementsprechend werden die Streckendaten vorzugsweise auf fachnotorische Art und Weise in einer Speichervorrichtung der Berechnungsvorrichtung 9 gespeichert. Es ist ebenfalls möglich, die Streckendaten in einer mit der Berechnungsvorrichtung 9 in Verbindung stehenden Speichervorrichtung (10) zu speichern oder die Streckendaten auf einem Datenspeicher zu speichern, der entsprechend von einem anstelle der Speichervorrichtung (10) auftretenden Lesegerät gelesen wird.

Gemäß dem in der Figur 1 gezeigten Ausführungsbeispiel wird die Rennstrecke 2 durch geordnete Sequenzen von Eckpunkten 11 abgebildet, die in einem festen Koordinatensystem 12 gemessen werden und die als Streckendaten fungieren. Eine Verbindung der Eckpunkte 11 der Reihe nach durch gerade Linienstücke definiert somit eine innere oder äußere Abgrenzung der Strecke 2. Auf diese Art und Weise ist die Abbildung jeder beliebigen zweidimensionalen Streckentopologie möglich. Zudem lassen sich anhand der Eckpunkte 11 bzw. der Eckpunktsequenzen sowohl einzelne Streckenabschnitte als auch die vorgegebene Fahrtrichtung definieren bzw. erkennen. Selbstverständlich sind jedoch auch andere dem Fachmann bekannte Streckenabbildungsarten ebenfalls anwendbar.

In dem in Figur 1 gezeigten Ausführungsbeispiel werden die Rennfahrzeuge 3 anhand des Koordinatensystems 12 geortet. Da jedoch der Vergleich von Koordinatendaten verschiedener Koordinatensysteme lediglich eine mathematische Umformung bedarf, können die Ortungsdaten der jeweiligen Rennfahrzeuge 3 auch auf der Basis anderer Koordinatensysteme bestimmt werden. Dieser Fall könnte beispielsweise dann auftreten, wenn einige Rennfahrzeuge über GPS-Empfänger geortet werden, während die Ortungsdaten anderer Rennfahrzeuge 3D über Peilempfänger eines lokal errichteten Peilsystems 23 ermittelt werden.

In der Figur wird angenommen und angedeutet, daß die Rennfahrzeuge 3 sich gegen den Uhrzeigersinn auf der Rennstrecke 2 bewegen. Wird gleichwohl angenommen, daß das Rennfahrzeug 3X ein liegengebliebenes Fahrzeug darstellt, so befindet sich das Rennfahrzeug 3A kurz vor der Gefahrenstelle. Das Rennfahrzeug 3B hat von der unmittelbaren Gefahrenzone noch einen Sicherheitsabstand, während nach der Darstellung für die Fahrzeuge 3C keine unmittelbare Gefahr besteht. Ein Liegenbleiben eines Rennfahrzeugs 3 läßt sich daran erkennen, daß seine Position sich im wesentlichen nicht mehr ändert. Durch Feststellung des betroffenen Streckenabschnitts und die jeweiligen Positionen der restlichen am Ortungssystem 1 beteiligten Rennfahrzeuge 3A, 3B, 3C läßt sich der jeweilige individuelle Gefahrengrad für die restlichen Fahrzeuge 3A, 3B, 3C bestimmen.

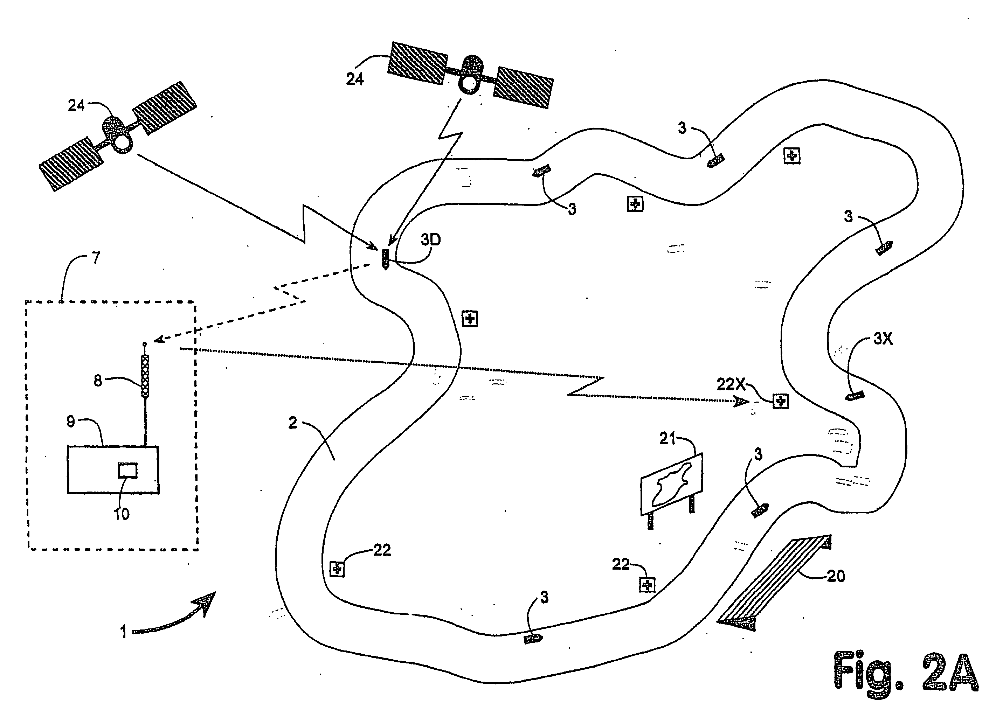

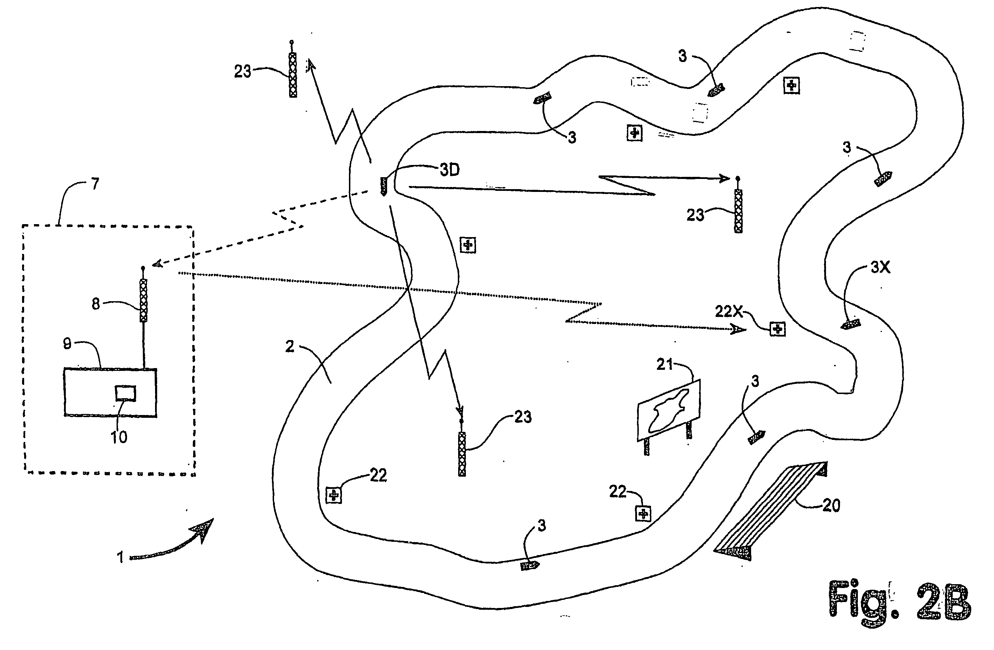

Die Figuren 2A und 2B zeigen mehrere Merkmale eines Ortungssystems 1 nach einem vorteilhaften Ausführungsbeispiel gemäß der ersten bzw. zweiten Ausführungsform der Erfindung. Gezeigt werden eine Rennstrecke 2, auf der sich mehrere am Ortungssystem 1 beteiligte Rennfahrzeuge 3 befinden, sowie zwei GPS-Satelliten 24. Entlang der Rennstrecke 2 stehen mehrere Streckenüberwachungsposten 22, eine Zuschauertribüne 20 und eine Videogroßleinwand 21, wobei ersteres und letztere Bestandteil des exemplarischen Ortungssystem 1 sind. In den Figuren weist das Ortungssystem 1 zudem eine Zentrale 7, eine Sender-Empfänger-Anlage 8 und eine Berechnungsvorrichtung 9 auf. In der Figur 2B weist das Ortungssystem 1 zusätzlich drei Peilempfänger 23 auf.

In der Figur 2A gemäß der ersten Ausführungsform der Erfindung verfügt das Rennfahrzeug 3D als Ortungsvorrichtung 5 über einen GPS-Empfänger, der Funksignale von GPS-Satelliten 24 empfängt. Aus diesen Signalen gewinnt der GPS-Empfänger oder eine sonstige dafür geeignete Ortungsvorrichtung im Rennfahrzeug 3 Ortungsdaten, aus denen die aktuelle Position des Rennfahrzeugs 3 bestimmt werden kann. Die gewonnenen Ortungsdaten werden über einen Sender 6 im Rennfahrzeug 3 an eine Zentrale 7 übermittelt, die über einen dem Sender 6 zugeordneten Empfangsvorrichtung 8 verfügt. Dementsprechend bilden die jeweiligen Sender 6 der Rennfahrzeuge 3 und die Zentrale 7 des in Figur 2A abgebildeten bevorzugten Ausführungsbeispiels ein sternförmiges Netzwerk. Zusammen bilden die Ortungsvorrichtung 5 und der Sender 6 im Rennfahrzeug 3 eine Fahrzeuginformationsvorrichtung 4.

In der Figur 2B gemäß der zweiten Ausführungsform der Erfindung wird die Position des Fahrzeugs 3D über einen im Fahrzeug 3D montierten Peilsender 6B, die mindestens drei in der Nähe der Rennstrecke 2 angeordeten Peilempfänger 23 und der von der Zentrale 7 umfaßten Berechnungsvorrichtung 9 bestimmt. Der Peilsender 6B strahlt Peilsignale aus, die von den Peilsender empfangen, verarbeitet und als Ortungsdaten an die Zentrale 7 weitergeleitet werden, wo sie in der Berechnungvorrichtung 9 zur Positionsbestimmung des Fahrzeugs 3D dienen. Die Ortungsdaten können auf an sich bekannte Art und Weise, beispielsweise per Kabel, von den Peilempfängern 23 an die Zentrale 7 übermittelt werden. Somit entfiele ggf. die Notwendigkeit eines Empfängers 8 in der Zentrale 7. Im dargestellten Ausführungsbeispiel dient der Empfänger 8 dazu, Fahrzeugbetriebskenndaten bzw. redundante Ortungsdaten von einem im Fahrzeug untergebrachten Datensender 6A zu empfangen, die vorzugsweise zur Überprüfung der Position oder des Betriebszustands des Rennfahrzeugs 3D verwendet werden.

Erfindungsgemäß verfügt jedes am Ortungssystem 1 beteiligtes Rennfahrzeug 3 über eine Fahrzeuginformationsvorrichtung 4. Diese können jedoch jeweils nach unterschiedlichen Arbeitsprinzipien ausgestaltet sein. Die oben beschriebenen Schritte zur Gewinnung von Ortungsdaten und zur Berechnung der Position eines Rennfahrzeugs 3 werden mutatis mutandis für die jeweiligen Fahrzeuge gleichfalls ausgeführt.

In einer der Zentrale 7 zugeordneten Berechnungsvorrichtung 9, die einen Speicher 10 umfaßt, wird aus den Ortungsdaten anhand der im Speicher 10 gespeicherten Streckendaten die Position des Rennfahrzeugs 3 auf der Rennstrecke 2 berechnet. Die so berechnete Position gibt Aufschluß über den Rang des Rennfahrzeugs 3 unter den am Ortungssystem 1 beteiligten Rennfahrzeugen 3 und auch darüber, ob das Rennfahrzeug 3 stehengeblieben, gefährlich langsam geworden ist oder die Rennstrecke 2 verlassen hat.

In den Figuren 2A und 2B wird beispielshafterweise angedeutet, daß das am Ortungssystem beteiligte Fahrzeug 3X stehengeblieben ist. Aus den in der Berechnungsvorrichtung 9 gewonnenen Positionsinformationen wird ein solches Stehenbleiben von der Berechnungsvorrichtung 9 oder einer mit der Berechnungsvorrichtung 9 entsprechend in Verbindung stehenden Vorrichtung bevorzugterweise in der Zentrale 7 festgestellt. Daraufhin wird über die Sender-Empfänger-Anlage 8 eine entsprechende Meldung an die Rennfahrzeuge 3 und/oder an die Streckenüberwachungsposten 22 ausgestrahlt. Aus Sicherheitsgründen werden die Daten erfindungsgemäß vorzugsweise in verschlüsselter Form von der Sender-Empfänger-Anlage 8 gesendet. Da die Position des liegengebliebenen Rennfahrzeugs 3X bekannt ist, ist es möglich, unter Verwendung einer Kennung oder anderer fachnotorischer Unterscheidungsmittel, eine gezielte Meldung an den dem Rennfahrzeug 3X nächstliegenden Streckenüberwachungsposten 22X zu senden. Entsprechend ist es möglich, eine unterschiedliche Meldung an die Rennfahrzeuge 3C als an die Rennfahrzeuge 3B bzw. 3A zu senden. Wie oben erwähnt, könnte somit entsprechend dem Gefahrengrad an das Fahrzeug 3A "rotes Licht" gemeldet werden, während dem Rennfahrzeug 3B "gelbes Licht" und den Fahrzeugen 3C "grünes Licht" signalisiert wird, was dann in den jeweiligen Fahrzeugen 3 entsprechend angezeigt wird. Gleichfalls könnte die Gefahr über entsprechende Anzeigevorrichtungen am Streckenrand angezeigt werden, beispielsweise über eine schwenkbare Flagge oder über eine Ampelanzeige.

Die Figur 2A bzw. 2B zeigt eine dem Ortungssystem zugehörige Videogroßleinwand 21, die eine visuelle Anzeige der jeweiligen aktuellen Fahrzeugpositionen ausgewählter Rennfahrzeuge 3 auf der Rennstrecke 2 ermöglicht. Die Videogroßleinwand 21 wird von Signalen gespeist, die in der Berechnungsvorrichtung 9 oder einer sonstigen Darstellungsvorrichtung unter Einbezug der in der Berechnungsvorrichtung 9 berechneten Positionen und der wie oben beschrieben gespeicherten Streckendaten erzeugt werden. Solche oder ähnliche Signale können ebenfalls an Fernsehsender oder sonstige Übermittlungsdienste, beispielsweise an einen Internetprovider, zur Übertragung gespeist werden. Die Darstellung muß sich nicht auf eine Darstellung der Fahrzeugpositionen beschränken, sondern kann auch Informationen zu den jeweiligen Fahrzeugen 3 oder sonstige Renn- oder Werbeinformation umfassen.

Die durch das erfindungsgemäße Ortungssystem 1 gewonnene Positionsinformation bzgl. der beteiligten Rennfahrzeuge 3 kann auch dazu verwendet werden, Fernseh- bzw. Überwachungskameras entlang der Strecke 2 automatisch auf ein oder mehrere ausgewählte Fahrzeuge 3 zu richten bzw. steuern. Gleichfalls könnte das Bild derjenigen Kamera, die ein ausgewähltes Rennfahrzeug 3 am besten im Visier hat, automatisch angezeigt werden. Etliche andere, ebenfalls anwendbare Abwandlungen dieses Prinzips sind für den Fachmann leicht erkennbar.

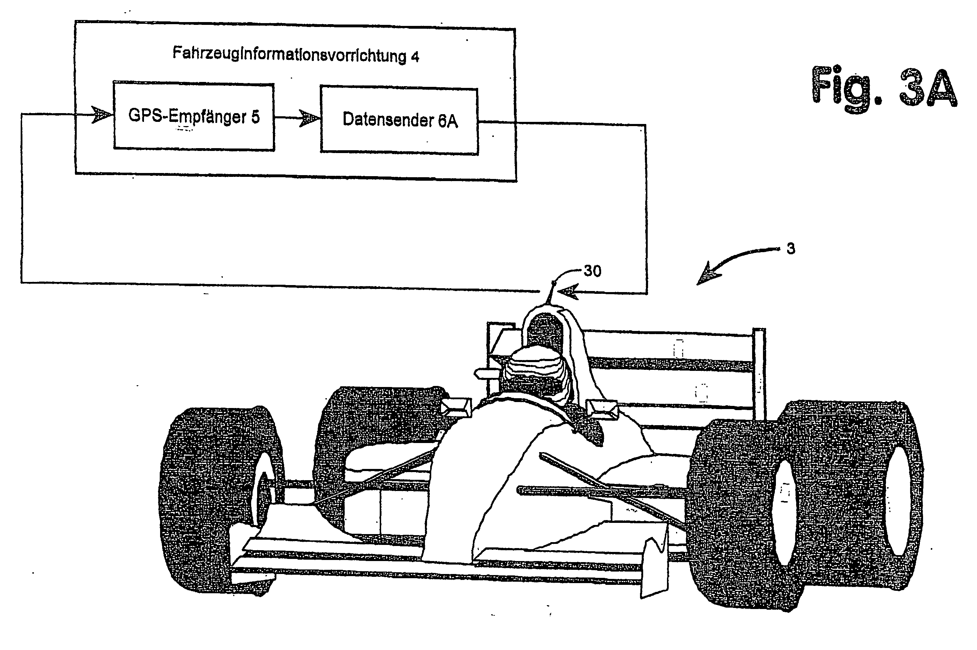

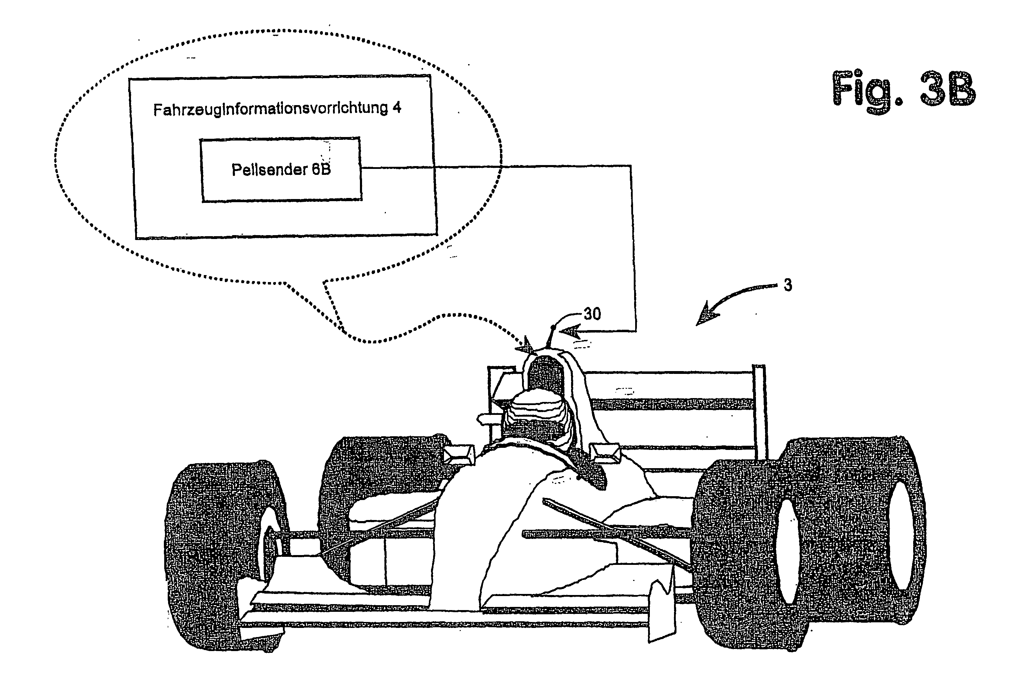

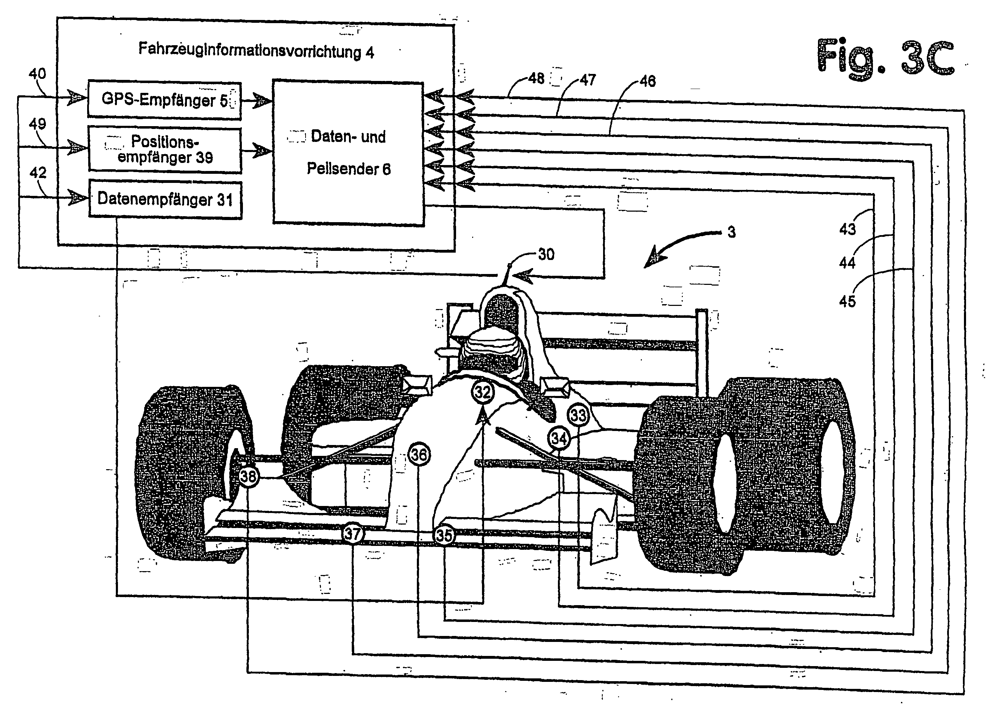

Die Fahrzeuge, die am Rennen teilnehmen, sind nur geringfügig um- bzw. aufzurüsten. Die Figuren 3A, 3B und 3C zeigen verschiedene Ausführungsbeispiele der zwei Ausführungsformen eines erfindungsgemäß ausgestatteten Rennfahrzeugs 3. Erfindungsgemäß weisen die Fahrzeuge 3 eine Antenne 30 und eine Fahrzeuginformationsvorrichtung 4 auf, die jeweils auf fachnotorische Weise im oder am Fahrzeug montiert sind. Letzteres ist in der Figur 3B durch gestrichelte Linien angedeutet.

Figur 3A zeigt ein Rennfahrzeug mit einer minimal ausgestatteten Fahrzeuginformationsvorrichtung 4 gemäß der ersten Ausführungsform der Erfindung, wobei die Fahrzeuginformationsvorrichtung 4 nur die wesentlichen Komponenten umfaßt. Dementsprechend weist die Fahrzeuginformationsvorrichtung 4 lediglich eine Ortungsvorrichtung 5 und einen Sender 6 auf.

Im dargestellten Ausführungsbeispiel fungiert ein GPS-Empfänger 5 als Ortungsvorrichtung 5 und ein Datensender 6A erfüllt die Rolle des Senders 6. Über die Antenne 30 werden GPS-Funksignale von einer GPS-Satellite 24 an die den GPS-Empfänger übermittelt, wo sie in Ortungsdaten verarbeitet werden. Die Ortungsdaten werden im Datensender 6A entsprechend aufbereitet und an die Antenne 30 geleitet, von wo aus sie an einen Empfänger 8 der Zentrale 7 gefunkt werden. Es ist dem Fachmann bekannt, daß die Aufgabenverteilung unter den von der Fahrzeuginformationsvorrichtung 4 umfaßten Komponenten 5, 6 ggf. auch anders gestaltet werden kann. Wie oben erwähnt, können erfindungsgemäß auch andere Ortungsvorrichtungen 5 und Sender 6 ebenfalls angewandt werden.

Figur 3B zeigt ein Rennfahrzeug mit einer minimal ausgestatteten Fahrzeuginformationsvorrichtung 4 gemäß der zweiten Ausführungsform der Erfindung, wobei die Fahrzeuginformationsvorrichtung 4 nur die wesentlichen Komponenten umfaßt. Dementsprechend weist die Fahrzeuginformationsvorrichtung 4 lediglich einen Peilsender 6B auf, der Peilsignale über die Antenne 30 an entsprechende Peilempfänger 23 funkt, von wo aus sie wie oben beschrieben verwertet werden.

Erfindungsgemäß können die jeweiligen Fahrzeuginformationsvorrichtungen 4 der am Ortungssystem beteiligten Fahrzeuge 3 zusätzlich mit einer oder mehreren weiteren Vorrichtungen 33-39 in Verbindung stehen oder diese gar umfassen, die Fahrzeugbetriebskenndaten oder redundante Ortungsdaten direkt oder über den Fahrzeuginformationsvorrichtung 4 an den Sender 6 übermitteln, um diese Betriebskenndaten bzw. Ortungsdaten an die Zentrale 7 zu senden. Ein mit vielen unterschiedlichen Zusatzvorrichtung ausgestattetes Fahrzeug 3 ist in der Figur 3C dargestellt. Diese weiteren Vorrichtungen 33-39 können erfindungsgemäß bei den jeweiligen Fahrzeugen 3 unterschiedlich sein. Die Art der Zusatzausstattung der jeweiligen Rennfahrzeug 3 hängt unter anderem sowohl vom Gewicht der Vorrichtungen 33-39 als auch von deren Kosten und Platzbedarf ab.

Das Rennfahrzeug 3 des in Figur 3C abgebildeten Ausführungsbeispiels entspricht sowohl der ersten als auch der zweiten Ausführungsform der Erfindung, da die abgebildete Fahrzeuginformationsvorrichtung 4 sowohl über einen Peilsender 6 als auch über eine Ortungsvorrichtung 5 und einen Sender 6 verfügt. Somit ist eine redundante Ortung des Fahrzeugs durch das erfindungsgemäße Ortungssystem möglich.

Die dargestellte Fahrzeuginformationsvorrichtung 4 verwendet wahlweise einen GPS-Empfänger 5 als Ortungsvorrichtung 5. Über die Antenne 30 oder eine separate Antenne empfängt der GPS-Empfänger 5 GPS-Signale 40 von GPS-Satelliten 23 und gewinnt daraus GPS-Ortungsdaten, die an den Datensender 6 zur Übermittlung an die Zentrale 7 weitergeleitet werden. Obwohl die so gewonnenen GPS-Daten bekanntermaßen fehlerbehaftet sind, ist erfindungsgemäß keine Korrektur zwingend notwendig, da der Fehler alle am Ortungssystem beteiligten Fahrzeuge 3 gleich betrifft. Ggf. kann ein GPS-Empfänger in der Zentrale 7 installiert werden, dessen GPS-Daten mit der festen, bekannten Position der Zentrale 7 verglichen wird, um einen Korrekturvektor für die aus den Fahrzeugen 3 erhaltenen GPS-Daten zu ermitteln.

Zur redundanten Ortung des Rennfahrzeugs 3 verfügt die dargestellte Fahrzeuginformationsvorrichtung 4 unter anderem zusätzlich über einen Peilsender 6, der über die Antenne 30 oder eine separate Antenne Peilsignale an in der Nähe der Rennstrecke 2 errichteten Peilempfänger 23 funkt. Dort werden, wie oben beschrieben, Ortungsdaten zur Verwendung in der Zentrale 7 aus den Peilsignalen gewonnen. Die Aufgabe des Peilsenders 6 wird ggf. vom Datensender 6 übernommen bzw. die beiden Sender 6 werden als integrale Einheit realisiert.

Das abgebildete Rennfahrzeug 3 umfaßt als Zusatzausstattung einen Motorumdrehungssensor 33, einen Getriebesensor 34, einen Bodenbewegungssensor 35, einen Gyrosensor 36, einen Induktionsschleifensensor 37, einen Radumdrehungssensor 38 und einen Positionsempfänger 39. Der Gyrosensor 36 mißt die Beschleunigung des Fahrzeugs 3 über ein im Gyrosensor 36 eingebautes piezoelektrisches Element und liefert anhand der Beschleunigungsmessungen Ortungsdaten. Der Motorumdrehungssensor 33 und der Radumdrehungssensor 38 messen auf herkömmlicherweise die Rotationsgeschwindigkeit des Motors bzw. eines der Räder und liefern entsprechende Daten, vorzugsweise in Form Pulsinformationen oder anderer digitaler Daten. Der Bodenbewegungssensor 35 verwendet Infrarot-, Ultraschalloder Radarsignale, um die Geschwindigkeit des Fahrzeugs 3 festzustellen und in entsprechender Datenform herauszugeben. Der Getriebesensor 34 stellt die Abtriebsdrehzahl am Getriebe fest und meldet dies ebenfalls in Datenform. Das Vorbeifahren an herkömmlicherweise in den Fahrboden hineingegossenen Induktionschleifen kann über den Induktionsschleifensensor 37 festgestellt werden, um Ortungsdaten zu gewinnen. Es können auch Positionssender mit kleiner Apertur entlang der Rennstrecke aufgestellt werden, die Ortungssignale 49 in einem jeweils lokalisierten Bereich ausstrahlen. Die Ortungssignale 49 werden über die Antenne 30 oder eine separate Antenne von der Positionsempfänger 39 empfangen, der die Ortungssignale 49 in Ortungsdaten aufarbeitet und an den Datensender 6 zur Übermittlung an die Zentrale 7 weiterleitet.

Gemäß dem dargestellten Ausführungsbeispiel werden die Daten der jeweiligen Sensoren bzw. Vorrichtungen 33-38 als Datensignale 43-48 an den Datensender 6 zur Übermittlung an die Zentrale 7 weiterleitet. Wie in der Figur 3C angedeutet ist, werden Ausgewählte der Datensignale 43-48 ggf. erst nach Aufbereitung in der Fahrzeuginformationsvorrichtung 4 an den Datensender 6 weitergeleitet. Aus Sicherheitsgründen werden die Daten erfindungsgemäß vorzugsweise in verschlüsselter Form vom Sender 6 ausgestrahlt.

Die dargestellte Fahrzeuginformationsvorrichtung 4 umfaßt ebenfalls einen Datenempfänger 31, der über die Antenne 30 oder eine separate Antenne Sicherheits- bzw. Datensignale 42 vorzugsweise von der Zentrale 7 empfängt. Die Signale 42 werden im Datenempfänger 31 oder in der Fahrzeuginformationsvorrichtung 4 entsprechend aufbereitet, um eine wie eingangs besprochene Warn- oder sonstige Anzeige über eine Anzeigevorrichtung, beispielsweise in Form von Cockpit-Anzeigelampen 32 am Armaturenbrett, ggf. zu realisieren.

Erfindungsgemäß sind die jeweiligen Komponenten der Fahrzeuginformationsvorrichtung 4 bzw. Sensoren 33-38 an geeigneter Stelle an Bord des Fahrzeugs 3 befestigt und miteinander bzw. mit dem Sender 6 in einer fachnotorisch die bestrebte Funktionalität wahrenden Art und Weise, verbunden bzw. vernetzt. Es ist dem Fachmann bekannt, daß die beschriebene Aufgabenverteilung unter den vom erfindungsgemäßen Ortungssystem umfaßten Komponenten ggf. auch anders gestaltet werden kann.

Die gewonnenen Daten der physikalischen Sensoren 33-38 werden neben der Feststellung der Drehzahlen, Beschleunigungswerte, Drehrichtungen und Bewegungsgeschwindigkeiten auch dahingehend verglichen, ob eine im gegenseitigen Zusammenspiel für eine ordnungsgemäße Fortbewegung des Fahrzeugs 3 sinngebende Relation zwischen den ermittelten Werten besteht. Ist die Abtriebsdrehzahl des Getriebes beispielsweise unverhältnismäßig höher als die Raddrehzahl, so läßt sich daraus sofort ein Differentialdefekt diagnostizieren oder ist die Räderdrahzahl unverhältnismäßig höher als die gemessene Fortbewegungsgeschwindigkeit über dem Boden, so läßt sich daraus sofort ein Durchdrehen der Räder diagnostizieren. Gemeinsam mit den Ergebnissen des Beschleunigungssensors 36 und gegebenfalls des GPS-Empfängers 5 läßt sich daraus wiederum eine Abweichung von der zulässigen Bewegungs-Toleranzbreite nicht nur mit Absoutwerten, sondern auch mit redundanten Zusatzinformationen verifizieren.

Aus den gewonnen Daten der GPS-Ortungsvorrichtung 5 und der physikalischen Sensoren läßt sich mit hoher Sicherheit die korrekte oder fehlerhafte Bewegung des Fahrzeugs 3 auf der Rennstrecke 2 in Fahrtrichtung überprüfen. Die durch die beschrieben oder andere fachnotorischen Sensoren bzw. Vorrichtungen gewonnenen Daten können in der Zentrale 7 dazu verwendet werden, einen evtl. Motorstillstand, die Position, die Geschwindigkeit, o.ä. Kenndaten eines am Ortungssystem beteiligten Rennfahrzeugs 3 festzustellen.

Um das vorstehend beschriebene Ortungssystem in vorteilhafter Weise für weitere Anwendungen zu nutzen, werden die vom vorstehend beschriebenen Ortungssystem gewonnenen und vorzugsweise gespeicherten oder zwischengespeicherten Daten dazu herangezogen, computergestützte Simulationsspiele zu unterstützen. Die Referenzdaten bilden dabei die Randbedingungen für das Computer-Simulationsspiel. Diese Verwendung des Ortungssystems bzw. dessen gewonnener Daten, eröffnet die Möglichkeit, derartigen Simulationsspielen einen bislang nicht erreichten Bezug zur Realität zu geben, indem beispielsweise die Echt-Zeitachse des reellen Rennverlaufs oder die reellen Fahrzustands- und Betriebsdaten der Rennfahrzeuge während des reell abgelaufenen oder ablaufenden Rennens als Randbedingung für das Simulationsspiel eingespeist werden. Über eine geeignete Schnittstellen-Software können diese Daten ohne weiteres mit der Simulation kompatibel gemacht werden.

Die Daten können als Referenzdaten unbearbeitet oder aber auch in bearbeiteter, d.h. in aufbearbeiteter Form dem Simulationsspiel eingespeist werden, wobei wiederum eine geeignete Schnittstelle bzw. Schnittstellen-Software für die Kompatibilität des Datensatzes mit dem Simulationsspiel sorgt. Im Rahmen dieser Datenbearbeitung kann beispielsweise die Zeitachse der Daten gestreckt werden, so dass sich die Daten auch für ungeübte Spieler gut nutzen lassen.

Schon allein dadurch dass die vom Ortungssystem übernommenen Positionsdaten in der Regel auch die Höhendaten des Kurses beinhalten, kann die Wirklichkeitsnähe des Simulationsspiels erheblich gesteigert werden. Eine weitere Verbesserung gelingt dadurch, dass auch die Betriebsdaten der Fahrzeuge in die Simulation einfließen können, so dass es erstmalig gelingt, in einem Simulationsspiel einen Kurs gegen Vergleichsfahrzeuge in Echtzeit derart zu fahren, dass auch das Verhalten des Fahrzeugs Berücktigung finden kann.

Um die Ortungs- bzw. Betriebskenndaten im Rahmen der beanspruchten Erfindung zu gewinnen, verarbeiten, übermitteln und/oder auszuwerten stehen dem Fachmann unzählige Vorrichtungen zur Verfügung. Beispielsweise durch Verwendung eines Frequenz- oder Zeitmultiplexsignals oder einer entsprechenden Kennung der übermittelten Daten kann zwischen den Daten der jeweiligen Rennfahrzeugen 3 differenziert werden.

Somit dienen die in der Beschreibung erläuterten Ausführungs- bzw. Anwendungsbeispiele der Erfindung lediglich als Beispiele dafür, was der Fachmann in dem jeweiligen Kontext als äquivalent versteht oder verstehen könnte und ggf. anstelle eines der aufgelisteten Beispiele verwenden könnte. Solche Äquivalente gehören somit ebenso zur Erfindung wie die explizit ausgeführten, unvollzähligen Beispiele.

## Patentansprüche

1. Verwendung der über eine vorzugsweise volle Renndistanz aufgezeichneten Positions- und/oder Betriebsdaten eines Ortungssystems (1) für Rennfahrzeuge auf einer Rennstrecke in Bezug auf zumindest ein Rennfahrzeug als Referenzdaten. für ein Computer-Simulationsspiel, wobei
jedes der Rennfahrzeuge (3) eine Fahrzeuginformationsvorrichtung (4) zur Gewinnung und Ausgabe von Daten aufweist, über die die Position des Fahrzeugs (3) bestimmt werden kann, und
einen Sender (6) umfasst, der die Daten an eine Zentrale (7) übermittelt, und
die Zentrale (7) über
mindestens einen Empfänger (8) zum Empfang der übermittelten Ortungsdaten,
eine Speichervorrichtung (10) zum Speichern von Streckendaten (11) der Rennstrecke (2) ,
eine Berechnungsvorrichtung (9), die aus den empfangenen Ortungsdaten der jeweiligen Rennfahrzeuge (3) und anhand der gespeicherten Streckendaten (11) die Position der Rennfahrzeuge (3) auf der Rennstrecke (2) berechnet, verfügt, **dadurch gekennzeichnet, dass** die Zentrale (7) einen Sender (8) aufweist, der Sicherheitsdaten ausstrahlt, und
mindestens eins der Rennfahrzeuge (3)
einen Empfänger, der die Sicherheitsdaten von der Zentrale (7) empfängt, und
eine Anzeige, die anhand der Sicherheitsdaten ggf. eine Warnung anzeigt, umfasst.

2. Verwendung nach Anspruch 1, **dadurch gekennzeichnet, dass** die Referenzdaten in bearbeiteter Form vom Computer-Simulationsspiel genutzt werden.

3. Verwendung nach Anspruch 1 oder 2, **dadurch gekennzeichnet, dass** die Positionsdaten des Ortungssystems die Höhendaten des Kurses mit umfassen.

4. Verwendung nach einem der Ansprüche 1 bis 3, **dadurch gekennzeichnet, dass** die Referenzdaten zur Verwendung bei der Spielapplikation über ein Netzwerk, wie zum Beispiel über das Internet übertragen werden.

5. Verwendung nach einem der Ansprüche 1 bis 4, **dadurch gekennzeichnet, dass** die Referenzdaten über eine Schnittstelle zur Verwendung bei der Spielapplikation aufbereitet werden.

6. Verwendung nach einem der Ansprüche 1 bis 5 in Verbindung mit einem Ortungssystem (1) mit
einer Mehrzahl von Rennfahrzeugen (3), wobei die Fahrzeuginformationsvorrichtung (4) in jedem der Rennfahrzeuge (3) die Daten, über die die Position des Fahrzeugs (3) bestimmt werden kann, mit einer integrierten Ortungsvorrichtung (5) als Ortungsdaten gewinnt und ausgibt.

7. Verwendung nach einem der Ansprüche 1 bis 5 in Verbindung mit einem Ortungssystem (1) mit
einer ersten Mehrzahl von Rennfahrzeugen (3), wobei die Fahrzeuginformationsvorrichtung (4) in jedem der Rennfahrzeuge (3) die Daten, über die die Position des Fahrzeugs (3) bestimmt werden kann, mit einem Peilsignale ausstrahlenden Sender (6) gewinnt und ausgibt, wobei
das Ortungssystem (1) mindestens drei Peilempfänger (23) aufweist, die anhand der ausgestrahlten Peilsignale Ortungsdaten gewinnen und weiterleiten.

8. Verwendung nach Anspruch 7 in Verbindung mit einem Ortungssystem (1) mit
einer zweiten Mehrzahl von Rennfahrzeugen (3), wobei die Fahrzeuginformationsvorrichtung (4) in jedem der Rennfahrzeuge (3) der zweiten Mehrzahl die Daten, über die die Position des Fahrzeugs (3) bestimmt werden kann, mit einer integrierten Ortungsvorrichtung (5) als Ortungsdaten gewinnt und ausgibt.

9. Verwendung nach Anspruch 8, wobei die erste und zweite Mehrzahl von Rennfahrzeugen (3) teilweise oder gänzlich übereinstimmen.

10. Verwendung nach einem der Ansprüche 6 bis 9, wobei die Ortungsvorrichtung (5) die Ortungsdaten über einen Empfänger satellitengestützter Ortungsdaten und/oder einen Peilempfänger und/oder einen Gyrosensor gewinnt.

11. Verwendung nach einem der Ansprüche 1 bis 10, wobei mindestens eines der Rennfahrzeuge (3) über mindestens eine Vorrichtung (33-38) zur Gewinnung von Fahrzeugbetriebskenndaten und/oder Ortungsdaten verfügt, die über die Fahrzeuginformationsvorrichtung (4) an die Zentrale (7) übermittelt werden.

12. Verwendung nach einem der vorhergehenden Ansprüche **dadurch gekennzeichnet, daß** die Ortungs- bzw. Betriebskenndaten bei der Übermittlung insgesamt oder teilweise verschlüsselt sind.

13. Verwendung nach einem der vorhergehenden Ansprüche mit Streckenüberwachungsposten (22), wobei mindestens ein Streckensüberwachungsposten (22) über
einen Empfänger, der die Sicherheitsdaten von der Zentrale empfängt, und
eine Anzeige, die anhand der Sicherheitsdaten ggf. eine Warnung anzeigt, verfügt.

14. Verwendung nach einem der vorhergehenden Ansprüche wobei, im Falle eines liegengebliebenen Fahrzeugs (3X), Sicherheitsdaten, von der Zentrale (7) ausgesendet werden, die eine Anzeige einer Warnung in denjenigen Fahrzeugen (3A, 3B, 3C) bzw. Streckenüberwachungsposten (22X) ermöglicht, die sich in einem bestimmten Streckenabschnitt befinden.

15. Verwendung nach einem der Ansprüche 13 oder 14 wobei die Sicherheitsdaten anhand der berechneten Position bzw. der Betriebskenndaten mindestens eines der Rennfahrzeuge (3) bestimmt werden.

16. Verwendung nach einem der vorhergehenden Ansprüche mit einer Darstellungsvorrichtung (9, 21), die über die Streckendaten (11) und die Fahrzeugpositionen eine visuelle Anzeige der aktuellen Position einer oder mehrerer Rennfahrzeuge (3) auf der Rennstrecke (2) ermöglicht.

17. Verwendung nach einem der vorhergehenden Ansprüche mit einer datenverarbeitenden Vorrichtung, die eine Aufbereitung ausgewählter im Ortungssystem enthaltener Renndaten derart durchführt und in ein Netz derart einspeist, daß eine Darstellung dieser Renndaten auf mit der datenverarbeitendeh Vorrichtung über das Netz vernetzten, darstellenden Datenverarbeitungsvorrichtungen möglich ist.

18. Verwendung nach Anspruch 17, wobei die datenverarbeitenden Vorrichtung und die darstellenden Datenverarbeitungsvorrichtungen über das Internet vernetzt sind.

19. Verwendung nach Anspruch 17 oder 18, wobei die datenverarbeitende Vorrichtung ein vorzugsweise interaktives Auswählen der jeweilig darzustellenden Renndaten und der jeweiligen Darstellungsart der Darstellung seitens des Benutzers der jeweiligen darstellenden Datenverarbeitungsvorrichtungen erlaubt und die Aufbereitung dementsprechend durchführt.

## Claims

1. Use of the position and/or operating data of a positioning system (1) for racecars on a racetrack, preferably recorded for the full distance of a race, with reference to at least one racecar as reference data for a computer simulation game, wherein
each of the racecars (3) has a vehicle information device (4) to collect and output data through which it is possible to determine the position of the vehicle (3), and
includes a transmitter (6) that transmits the data to a control center (7), and
the control center (7) has
at least one receiver (8) for receiving the transmitted position data,
a storage device (10) to store track data (11) of the race track (2),
a computation unit (9) that calculates the position of the racecars (3) on the racetrack (2) from the received position data of the respective racecars (3), and on the basis of the stored track data (11), **characterized in that** the control center (7) has a transmitter (8) that transmits safety data, and
at least one of the racecars (3) includes
a receiver that receives the safety data from the control center (7), and
a display that displays if necessary a warning with the help of the safety data.

2. Use according to claim 1, **characterised in that** the reference data in processed form are used by the computer simulation game.

3. Use according to claim 1 or 2, **characterized in that** the position data of the positioning system includes the altitude data of the course.

4. Use according to one of the claims 1 to 3, **characterized in that** the reference data is transmitted via a network such as via the Internet for use in a game application.

5. Use according to one of the claims 1 to 4, **characterized in that** the reference data is processed via an interface for use in a game application.

6. Use according to one of the claims 1 to 5 in connection with a positioning system (1), with a plurality of racecars (3), wherein the vehicle information device (4) collects and outputs the data through which it is possible to determine the position of the vehicle (3) in each of the racecars (3) via an integrated position device (5) as position data.

7. Use according to one of claims 1 to 5 in connection with a positioning system (1), with
a first plurality of racecars (3), wherein the vehicle information device (4) in each of the racecars (3) collects and outputs the data through which the position of the vehicle (3) can be determined, with the help of a transmitter (6) that emits localizing signals; wherein
the positioning system (1) has at least three localizing receivers (23) that collect and retransmit position data with the help of the emitted localizing signals.

8. Use according to claim 7 in connection with a positioning system (1), with
a second plurality of racecars (3), wherein the vehicle information device (4) collects and outputs the data through which it is possible to determine the position of the vehicle (3) in each of the racecars (3) of the second plurality via an integrated position device (5) as position data.

9. Use according to claim 8, wherein the first and second plurality of racecars (3) match in part or in full.

10. Use according to one of claims 6 to 9, wherein the positioning device (5) collects the position data via a receiver of satellite-supported position data and/or a localizing receiver and/or a gyrosensor.

11. Use according to one of claims 1 to 10, wherein at least one of the racecars (3) has at least one device (33-38) for the collection of vehicle operating data and/or position data that is transmitted to the control center (7) via the vehicle information device (4).

12. Use according to one of the preceding claims, **characterized in that** the position and operating data is fully or partially encoded for transmission.

13. Use according to one of the preceding claims, with track monitoring posts (22), wherein at least one track monitoring post (22) has
a receiver that receives the safety data from the control center, and
a display that if necessary displays a warning based on the safety data.

14. Use according to one of the preceding claims, wherein in case of a stalled vehicle (3X) safety data is sent out by the control center (7) that make it possible to display a warning in those vehicles (3A, 3B, 3C) or track monitoring posts (22X) that are in a certain track segment.

15. Use according to one of claims 13 or 14, wherein the safety data is determined using the calculated position or the operating data of at least one of the racecars (3).

16. Use according to one of the preceding claims, with a presentation device (9, 21) that allows a visual display of the actual position of one or more racecars (3) on the racetrack (2) via the track data (11) and the vehicle positions.

17. Use according to one of the preceding claims, with a data-processing device that processes selected racing data contained in the positioning system and inputs them into a network in such a way that a representation of this racing data on the displaying data-processing devices networked with the data-processing device via the network is feasible.

18. Use method according to claim 17, wherein the data-processing device and the displaying data-processing devices are networked via the Internet.

19. Use according to claim 17 or 18, wherein the data-processing device permits a preferably interactive selection of the respective racing data to be represented and the respective mode of representation by the user of the respective displaying data-processing devices and carries out processing accordingly.

## Revendications

1. Utilisation des données de position et/ou de fonctionnement, enregistrées sur un parcours de course, de préférence complet, d'un système de localisation (1) pour des véhicules de course sur une distance de course, en se référant à au moins un véhicule de course, en tant que données de référence pour un jeu de simulation sur ordinateur, où
chacun des véhicules de course (3) présente un dispositif d'information de véhicule (4), pour obtenir et éditer des données, dispositif par lequel la position du véhicule (3) peut être déterminée, et
comprend un émetteur (6) qui transmet des données à une centrale (7), et
la centrale (7) dispose
d'au moins un récepteur (8), servant à recevoir les données de localisation transmises,
d'un dispositif de mémorisation (10) pour stocker en mémoire des données d'itinéraire (11) du parcours de course (2),
d'un dispositif de calcul (9) qui, à partir des données de localisation reçues des véhicules de course (3) respectifs et à l'aide des données de distance (11) mémorisées, calcule la position des véhicules de course (3) sur le parcours de course (2), **caractérisée en ce que** la centrale (7) présente un émetteur (8) qui effectue une émission sans fil de données de sécurité, et
au moins l'un des véhicules de course (3)
comprend un récepteur, qui reçoit les données de sécurité depuis la centrale (7), et
un afficheur, qui affiche, le cas échéant, un avertissement à l'aide des données de sécurité.

2. Utilisation selon la revendication 1, **caractérisée en ce que** les données de référence sont utilisées sous forme traitée par le jeu de simulation sur ordinateur.

3. Utilisation selon la revendication 1 ou 2, **caractérisée en ce que** les données de position du système de localisation comprennent également les données d'altitude du parcours.

4. Utilisation selon l'une des revendications 1 à 3, **caractérisée en ce que** les données de référence sont transmises pour utilisation lors de l'application de jeu sur un réseau, tel que par exemple sur l'Internet.

5. Utilisation selon l'une des revendications 1 à 4, **caractérisée en ce que** les données de référence sont préparées par l'intermédiaire d'une interface en vue d'utilisation lors de l'application du jeu.

6. Utilisation selon l'une des revendications 1 à 5, en liaison avec un système de localisation (1), comprenant :
une pluralité de véhicules de course (3), le dispositif d'information de véhicule (4) acquérant et éditant, en tant que données de localisation, avec un dispositif de localisation (5) intégré dans chacun des véhicules de course (3), les données par l'intermédiaire desquelles la position du véhicule (3) peut être déterminée.

7. Utilisation selon l'une des revendications 1 à 5, en liaison avec un système de localisation (1), comprenant :
une première pluralité de véhicules de course (3), le dispositif d'information de véhicule (4) acquérant et éditant, avec un émetteur (6) émettant des signaux de repérage, dans chacun des véhicules de course, des données par l'intermédiaire desquelles la position du véhicule (3) peut être déterminé, où
le système de localisation (1) présente au moins trois récepteurs de repérage (23), acquérant et retransmettant les données de localisation à l'aide des signaux de repérage émis sans fil.

8. Utilisation selon la revendication 7, en liaison avec un système de localisation (1), comprenant :
une deuxième pluralité de véhicules de course (3), le dispositif d'information de véhicule (4) acquérant et éditant à l'aide d'un dispositif de localisation (5) intégré, en tant que données de localisation, dans chacun des véhicule de course (3) de la deuxième pluralité, les données par l'intermédiaire desquelles la position du véhicule (3) peut être déterminée.

9. Utilisation selon la revendication 8, la première et la deuxième pluralité de véhicules de course (3) coïncidant partiellement ou complètement.

10. Utilisation selon l'une des revendications 6 à 9, le dispositif de localisation (5) acquérant, par l'intermédiaire d'un récepteur, des données de localisation assistées par satellite et/ou un récepteur de repérage et/ou un capteur gyroscopique.

11. Utilisation selon l'une des revendications 1 à 10, où au moins l'un des véhicules de course (3) dispose d'au moins un dispositif (33, 38) pour l'obtention de caractéristiques de fonctionnement du véhicule et/ou de données de localisation, qui sont transmises à la centrale (7) par l'intermédiaire du dispositif d'information de véhicule (4).

12. Utilisation selon l'une des revendications précédentes, **caractérisée en ce que** les données de localisation, respectivement les caractéristiques de fonctionnement, lors de la transmission, sont codées globalement ou partiellement.

13. Utilisation selon l'une des revendications précédentes, avec des poteaux de surveillance de parcours (22), au moins un poteau de surveillance de parcours (22) disposant :
d'un récepteur, recevant les données de sécurité venant de la centrale, et
d'un afficheur, affichant, le cas échéant, un avertissement à l'aide des données de sécurité.

14. Utilisation selon l'une des revendications précédentes où, en cas de véhicule (3X) stationnaire, des données de sécurité sont émises par la centrale (7), qui permet un affichage d'un avertissement dans les véhicules (3A, 3B, 3C) , respectivement aux piliers de surveillance de parcours (22X), se trouvant dans un tronçon déterminé du parcours.

15. Utilisation selon l'une des revendications 13 ou 14, les données de sécurité étant déterminées à l'aide de la position calculée, respectivement des caractéristiques de fonctionnement d'au moins l'un des véhicules de course (3).

16. Utilisation selon l'une des revendications précédentes, avec un dispositif de représentation (9, 21) permettant, par l'intermédiaire des données de parcours (11) et des positions de véhicules, d'obtenir un affichage visuel de la position actuelle d'un ou plusieurs véhicules de course (3) sur le parcours de course (2).

17. Utilisation selon l'une des revendications précédentes, avec un dispositif traitant les données, qui. effectue une préparation de données de course sélectionnées, contenues dans le système de localisation, de manière à, et les injecte dans un réseau de façon à, permettre une présentation de ces données de course sur des dispositifs de traitement de données ayant une fonction de visualisation, mis en réseau sur le réseau, avec le dispositif traitant les données.

18. Utilisation selon la revendication 17, le dispositif traitant les données et les dispositifs de traitement de données à fonction de visualisation étant répartis selon un maillage sur l'Internet.

19. Utilisation selon la revendication 17 ou 18, le dispositif traitant les données permettant une sélection, de préférence, interactive, des données de course chaque fois à présenter et du type de présentation respectif de l'illustration de la part de l'utilisateur des dispositifs de traitement de données visualisateurs respectifs, et exécutant le traitement de manière correspondante.
